(19) Europäisches Patentamt
European Patent Office
Office européen des brevets

(11) **EP 2 232 208 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(51) Int Cl.:
***G01G 17/02*** *(2006.01)*  ***G01G 11/00*** *(2006.01)*
***D21G 9/00*** *(2006.01)*

(21) Anmeldenummer: **08805161.0**

(22) Anmeldetag: **09.10.2008**

(86) Internationale Anmeldenummer:
**PCT/EP2008/063508**

(87) Internationale Veröffentlichungsnummer:
**WO 2009/065666 (28.05.2009 Gazette 2009/22)**

(54) **VORRICHTUNG MIT EINEM BAND UND WENIGSTENS EINEM SENSOR ZUR BESTIMMUNG DES FLÜSSIGKEITSGEWICHTES IN EINEM BANDABSCHNITT, DER KEINE STOFFSUSPENSION TRÄGT**

DEVICE HAVING A BAND AND AT LEAST ONE SENSOR FOR DETERMINING THE FLUID WEIGHT IN A BAND SECTION CARRYING NO MATERIAL SUSPENSION

DISPOSITIF AVEC AU MOINS UNE BANDE ET AU MOINS UN CAPTEUR POUR DÉTERMINER LE POIDS D'UN LIQUIDE DANS UNE SECTION DE BANDE QUI NE PORTE PAS DE SUSPENSION DE MATIÈRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.11.2007 DE 102007047843**

(43) Veröffentlichungstag der Anmeldung:
**29.09.2010 Patentblatt 2010/39**

(73) Patentinhaber: **Voith Patent GmbH**
**89522 Heidenheim (DE)**

(72) Erfinder:
• **MÜNCH, Rudolf**
**89551 Königsbronn (DE)**

• **BAUER, Armin**
**A-3107 St. Pölten (AT)**
• **KAUFMANN, Oliver**
**89564 Nattheim (DE)**
• **HAAG, Jens**
**89522 Heidenheim (DE)**
• **SPINDLER, Jörg**
**73529 Schwäbisch Gmünd (DE)**
• **HARDT, Niels**
**89522 Heidenheim (DE)**
• **ABEL, Hartmut**
**89233 Neu-Ulm / Pfuhl (DE)**

(56) Entgegenhaltungen:
**WO-A-99/58991** **US-A- 6 099 690**
**US-A1- 2003 136 589**

**Beschreibung**

Die Erfindung betrifft eine Vorrichtung, umfassend ein Band mit einer Durchlässigkeit für eine Flüssigkeit, wobei das Band einen ersten Abschnitt aufweist, der eine Stoffsuspension, bestehend aus einer Flüssigkeit und einem Feststoff, trägt, und einen zweiten Abschnitt, der nur einen Teil der Flüssigkeit trägt, sowie eine Maschine, insbesondere eine Papiermaschine mit einer derartigen Vorrichtung, ein Verfahren zur Bestimmung des Wassergewichts einer Materialbahn und eine Verwendung der erfindungsgemäßen Vorrichtung.

Bei der Herstellung von Materialbahnen, insbesondere Faserstoffbahnen in Papier-, Karton- oder Tissuemaschinen, müssen die Eigenschaften der Faserstoffbahn kontinuierlich überwacht und kontrolliert werden, um eine ausreichende Qualität des Endproduktes zu gewährleisten und die Menge von verworfenem Endprodukt zu minimieren. Zur Steuerung beziehungsweise Regelung des Herstellungsprozesses können unterschiedliche Variablen verwendet werden, beispielsweise das Wassergewicht im Bereich der Nasspartie der Maschine.

Bei der Herstellung einer Faserstoffbahn, insbesondere einer Papier- oder Kartonbahn in einem kontinuierlichen Herstellprozess, wird zunächst eine Bahn aus einer Stoffsuspension auf einem sich bewegenden Band, das eine Durchlässigkeit aufweist, bevorzugt einem sich bewegenden Sieb, geformt. Hierbei wird der Bahn das Wasser aufgrund der Gewichtskraft und mit Hilfe von Vakuumabsaugung durch das Sieb entzogen. Die Bahn wird an die Entwässerung der Siebpartie anschlie-βend in einer Presseinrichtung transferiert, aus der Wasser weiter entzogen wird durch Trockenpressen. Anschließend wird die Bahn in eine Trockensektion überführt, in der der Trockenprozess abgeschlossen wird. Bei dem Papierherstellungsprozess handelt es sich im Wesentlichen um einen Entwässerungsprozess. Bei der Herstellung der Materialbahn in einem kontinuierlichen Prozess bezeichnet die MD-Richtung die sogenannte Maschinenrichtung, die im Wesentlichen mit der Richtung übereinstimmt, die die Materialbahn während des Herstellprozesses durchläuft. Die Bezeichnung CD-Richtung steht für die Richtung entlang der Breite der Bahn. Die CD-Richtung ist quer zur Maschinenrichtung und steht auf dieser im Wesentlichen senkrecht.

Bei dem Papierherstellungsprozess beeinflussen die Prozesse in der Nasspartie und insbesondere am Sieb wesentlich die Endqualität des Papieres, beispielsweise dessen Formation und Stärke. Deswegen gibt es im Stand der Technik eine Vielzahl von Regelverfahren, mit denen das Wasser im Bereich der Nasspartie bestimmt wird und als Grundlage für eine Regelung dient. Beispiele für derartige Regelungen sind in der WO 99/55959 A1 und der WO 99/64963 A1 offenbart. Als Sensoren zur Bestimmung des Wassergewichtes werden in diesen Anmeldungen Sensoren verwandt, mit denen die Leitfähigkeit des Stoffes auf dem Nassteil der Papiermaschine gemessen wird. Die Leitfähigkeit ist dann ein Maß für den Wassergehalt.

Aus der US 6,126,785 und der WO 99/57531 A1 ist bekannt, das Trockengewicht einer auf dem Sieb befindlichen Papierbahn zu bestimmen, indem das Gewicht des Bandes, hier des Siebes, bei der Gewichtsbestimmung mit einbezogen wird.

Die Bestimmungen des Wassergewichtes, wie sie beispielsweise in der WO 99/55959 A1 beschrieben sind, leiden unter dem Nachteil, dass nur eine ungenaue Bestimmung des Wassergewichtes möglicht ist, die vielfach nicht ausreicht, um mit Hilfe der Wassergewichtsregelung ausreichende Ergebnisse für die Papierqualität zu erzielen.

Dokument US 2003/0136589 A1 offenbart eine Förderbandwaage, die zur Verbesserung der Messgenauigkeit eine Kraftmesszelle mit einer Rolle in einem unbelasteten Teil des Förderbandes aufweist.

Aufgabe der Erfindung ist es daher, die Nachteile des Standes der Technik zu überwinden. Gemäß einem ersten Aspekt der Erfindung soll insbesondere eine Vorrichtung angegeben werden sowie ein Verfahren, das sich durch eine höhere Messgenauigkeit bei der Wassergewichtsbestimmung gegenüber bislang bekannten Vorrichtungen beziehungsweise Verfahren unterscheidet.

Gemäß einem zweiten Aspekt der Erfindung soll eine Vorrichtung angegeben werden, die sich dadurch auszeichnet, dass sie eine Bestimmung des Wasserhaltevermögens bzw. der Reinigungseffizienz des Siebes zulässt.

Erfindungsgemäß wird dies dadurch erreicht, dass bei einer Vorrichtung, die ein Band, insbesondere ein Sieb, umfasst, in dem Abschnitt des Bandes wenigstens ein Sensor angeordnet ist, der nicht die Stoffsuspension, bestehend aus flüssigem Stoff und Feststoff, trägt. Bei einem umlaufenden Band, wie es beispielsweise in einer Papiermaschine Verwendung findet, ist dieser zweite Abschnitt normalerweise der rücklaufende Abschnitt, das heißt der entgegen der Maschinenrichtung laufende Abschnitt des umlaufenden Bandes.

Bevorzugt ist die Vorrichtung derart ausgestaltet, dass neben dem Sensor, der in dem Abschnitt angeordnet ist, der keine Stoffsuspension trägt, wenigstens ein weiterer Sensor in dem Abschnitt des Bandes vorgesehen ist, der die Stoffsuspension trägt. Eine derartige Anordnung erlaubt nämlich die Messung des Wassergewichtes der Stoffsuspension gemäß einem ersten Aspekt der Erfindung, die sich auf dem Sieb befindet. Der Wassergewichtssensor, der an einer derartigen Stelle angeordnet ist, bestimmt das gesamte Wassergewicht der Stoffsuspension inklusive des sich im Sieb befindlichen Wassers. Um die Messgenauigkeit zu verbessern, kann der Wasseranteil im Bereich des Siebes, in dem keine Stoffsuspension auf das Sieb aufgebracht ist, das heißt im rücklaufenden Teil des Siebes, bestimmt werden. Das Wassergewichtsmesssignal der Stoffsuspension kann dann um den Anteil des im Sieb befindlichen Wassers korrigiert werden, was zu einer wesentlichen Verbesserung der Messgenauigkeit beiträgt.

Um ein Wassergewichtsprofil entlang der Maschinenrichtung (MD-Richtung) oder aber auch entlang der CD-Richtung bestimmen zu können, kann in einer vorteilhaften Ausgestaltung vorgesehen sein, dass eine Vielzahl von Wassergewichtssensoren in MD-Richtung und/oder in CD-Richtung unterhalb des Siebes, das die Stoffsuspension trägt, angeordnet ist.

Mit Hilfe der Vielzahl von Wassergewichtssensoren, die auf Leitfähigkeitsmessungen basieren, wie beispielsweise in der WO 99/55959 A1 beschrieben, kann ein Wassergewichtsprofil in Maschinenrichtung oder quer zur Maschinenrichtung, das heißt in CD-Richtung, aufgenommen werden, das wiederum zur Regelung beispielsweise der Papierqualität verwendet werden kann.

Auch im Bereich der im rücklaufenden Teil eines umlaufenden Siebes angeordneten Sensoren, die lediglich den reinen Wassergehalt im Sieb bestimmten, ist es möglich, mehrere Sensoren in Maschinenrichtung vorzusehen. Mit derartigen Sensoren ist es dann möglich, wenn zwischen die Sensoren Reinigungseinrichtungen eingebracht sind, beispielsweise Aussagen darüber zu erhalten, wie effizient eine Siebreinigung erfolgt. Um möglichst exakte Ergebnisse zu erhalten, ist es vorteilhaft, wenn der Sensor, der den Wassergehalt der Stoffsuspension misst und der Sensor im rücklaufenden Teil des umlaufenden Siebbandes, der lediglich den im Sieb zurückgehaltenen Wasseranteil misst, bezogen auf die Breite des Bandes beziehungsweise Siebes an gleichen Orten angeordnet ist.

Bevorzugt ist die zuvor beschriebene Vorrichtung mit einem umlaufenden Band, insbesondere einem Sieb und den angegebenen Sensoren, Teil der Nasspartie einer Vorrichtung zur Herstellung einer Bahn, insbesondere einer Faserstoffbahn.

Auf das umlaufende Band beziehungsweise Sieb wird die Stoffsuspension bei einer derartigen Vorrichtung beispielsweise mit Hilfe eines Stoffauflaufes aufgebracht.

Neben der Vorrichtung stellt die Erfindung auch mehrere Verfahren zur Bestimmung unterschiedlicher Größen bei der Herstellung einer laufenden Bahn zur Verfügung.

In einer ersten Ausgestaltung der Erfindung wird das Wassergewicht der Materialbahn, insbesondere der Faserstoffbahn, auf dem Band, insbesondere dem Sieb, exakt bestimmt, indem zunächst in dem ersten Abschnitt des Bandes, auf den die wässrige Stoffsuspension aufgebracht wird, das Wassergewicht an wenigstens einer Stelle mit einem Wassergewichtssensor, beispielsweise einem Leitfähigkeitssensor, einem optischen Sensor, vorzugsweise einem im Infrarot-Bereich arbeitenden Sensor, und/oder einem Mikrowellensensor, bestimmt wird. Das bestimmte Gewicht wird beispielsweise in einer Rechnereinheit als $WW_{Suspension}$ abgelegt. Sodann wird an derselben Stelle in der Breite des Bandes im zweiten Abschnitt des Bandes, der keine Stoffsuspension trägt, mit Hilfe eines Wassergewichtssensors das Wassergewicht des im oder am Band verbliebenen Wassers bestimmt. Diese Messgröße wird mit $WW_{wasser}$ bezeichnet und ebenfalls im Rechner abgelegt. Das Wassergewicht der Materialbahn ergibt sich dann durch Differenzbildung aus dem gemessenen Wert mit dem ersten Abschnitt des Bandes minus dem gemessenen Wert im zweiten Abschnitt des Bandes. Es gilt somit:

$$WW_{Bahn} = WW_{Suspension} - WW_{Wasser}.$$

Die erfindungsgemäße Vorrichtung kann aber nicht nur dazu verwendet werden, den exakten Wassergehalt beziehungsweise das exakte Wassergewicht der Stoffsuspension, die auf das Band aufgebracht wird, zu bestimmen, sondern auch dazu, das Wasserhaltvermögen des Siebbandes zu bestimmen. Zur Bestimmung des Wasserhaltevermögens des Siebbandes ist es nicht erforderlich in dem Abschnitt des Bandes Wassersensoren anzuordnen, in dem die Stoffsuspension aufgebracht wird. Vielmehr ist es ausreichend, wenn lediglich in dem rückgeführten Abschnitt des Bandes, in dem keine Stoffsuspension auf das Band aufgebracht ist, das Wassergewicht an wenigstens einem Ort bestimmt wird.

Wird mehr als ein Sensor im rücklaufenden Abschnitt des Bandes vorgesehen, so kann die Effektivität der Reinigung bestimmt werden, insbesondere dann, wenn die Sensoren im rücklaufenden Abschnitt vor und nach einer Siebreinigungsvorrichtung angeordnet sind.

Führt man im Abstand von bestimmten Zeiten Messungen des rücklaufenden Siebes durch, so kann man die Selbstreinigung des Siebes zurückschließen.

Die Erfindung soll nunmehr mit Bezug auf die Zeichnungen beispielhaft ohne Beschränkung hierauf beschrieben werden.

Es zeigen:

Figur 1        die Prinzipskizze einer Papiermaschine;

Figur 2        einen Ausschnitt einer Nasspartie einer Papierbahn mit umlaufendem Sieb in einer geschnittenen Ansicht;

Figur 3        ein aufgerolltes Sieb in der Draufsicht;

Figuren 4 und 5    detaillierte Ansichten der Wassergewichtsensoren im ersten und zweiten Abschnitt des Siebes;

Figur 6        eine erste Ausführungsform der Erfindung zur Durchführung einer Siebdiagnose;

Figur 7        eine zweite Ausführungsform der Erfindung zur Durchführung der Diagnose betreffend die Siebreinigung; und

Figur 8        eine Anordnung von Sensoren zur Bestimmung des Wassergewichtes einer aufgebrachten Papierbahn.

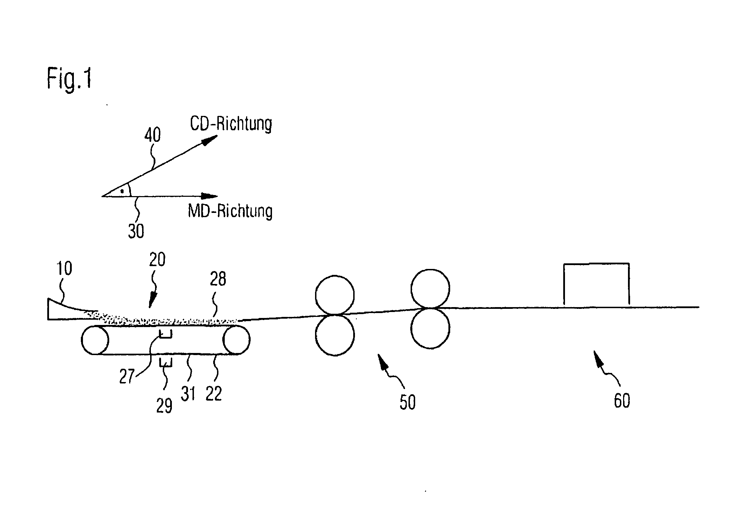

In Figur 1 ist ein prinzipieller Aufbau einer Papiermaschine dargestellt. Der Papierbrei beziehungsweise die Stoffsuspension, enthaltend die Flüssigkeit beziehungsweise Wasser mit den darin suspendierten Fasern, wird mittels eines Stoffauflaufes 10 auf eine Nasspartie 20, umfassend ein umlaufendes Sieb 22, aufgebracht. Im Bereich der Nasspartie 20 sind unterhalb des umlaufenden Siebes 22 Wassergewichtssensoren gemäß der Erfindung angeordnet. Dargestellt ist hier lediglich ein erster Wassergewichtssensor 27, der im ersten Abschnitt 28 des Siebes, in dem die Stoffsuspension auf das Sieb aufgebracht ist, angeordnet ist, sowie erfindungsgemäß ein zweiter Wassergewichtssensor 29, der im Bereich des zweiten Abschnittes des Siebes, auf dem keine Suspension aufgebracht ist, angeordnet ist. Der zweite Abschnitt 31 ist der rücklaufende Abschnitt des Siebes. Die Wassergewichtssensoren können sowohl in der Maschinenrichtung 30 (MD-Richtung) als auch quer zur Maschinenrichtung 40 (CD-Richtung) angeordnet sein. Mit Hilfe der Wassergewichtssensoren ist es möglich, das Wassergewichtsprofil der Stoffsuspension auf dem Sieb zu analysieren, beispielsweise mit einem Profilanalysator, der wiederum Teil eines Regelsystems sein kann, mit dem das Wassergewichtsprofil anhand von vorgegebenen Sollgrößen geregelt wird. Als Aktuatoren können beispielsweise die Verdünnungswasserventile (nicht dargestellt) am Stoffauflauf dienen. An die Nasspartie 20 der Papiermaschine schließt sich eine Pressenpartie 50 an, mit der die Papierbahn weiter entwässert wird. An die Pressenpartie 50 wiederum schließt sich die Trockenpartie 60 an, mit welcher der Trocknungsprozess der Papierbahn abgeschlossen werden kann. Am Ende der Trockenpartie 60 kann ein optischer Sensor, beispielsweise eine CCD-Kamera, angeordnet sein, mit der die Formation des Blattes, die wiederum ein Qualitätsmerkmal der Trockenpapierbahn ist, bestimmt wird.

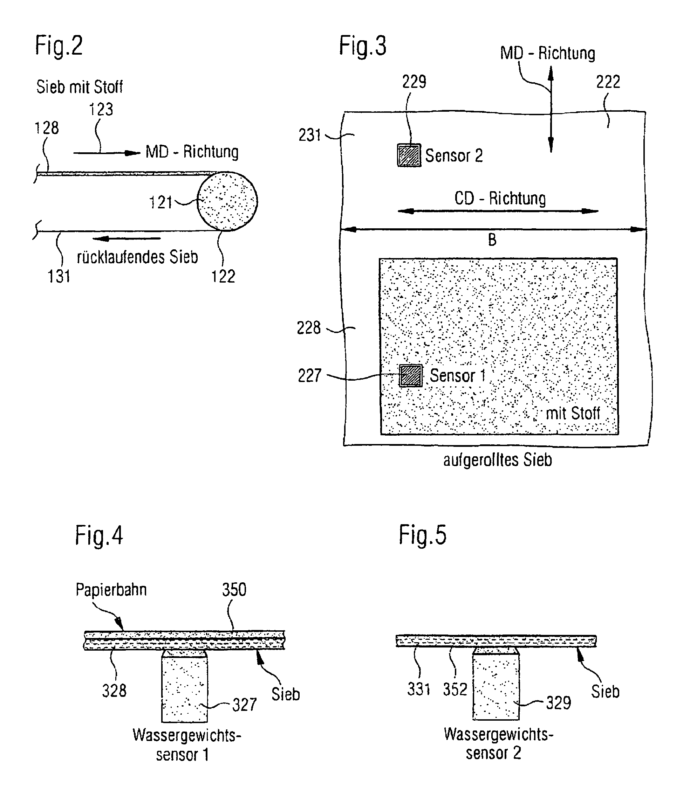

In Figur 2 ist detailliert ein umlaufendes Sieb 122 in einer Nasspartie einer Papiermaschine vereinfacht dargestellt. Das Sieb läuft um eine Rolle 121 um. Der Pfeil 123 gibt die Maschinenrichtung an. Wie aus Figur 2 zu erkennen ist, läuft das Sieb im ersten Abschnitt 128, in dem Stoffsuspension auf das umlaufende Sieb aufgebracht ist, in Maschinenrichtung (MD-Richtung), und in dem zweiten Abschnitt, in dem keine Stoffsuspension sich auf dem Sieb befindet, entgegen der Maschinenrichtung. Daher wird das Sieb im zweiten Abschnitt 131 auch als rücklaufendes Sieb bezeichnet.

In Figur 3 ist in einer Draufsicht auf ein aufgerolltes Sieb 222 die Anordnung der Sensoren in einer bevorzugten Ausführungsform dargestellt, insbesondere wenn die Sensoranordnung gemäß einem Aspekt der Erfindung dazu dienen soll, das Wassergewicht des Faserstoffes genau zu bestimmen. In einem solchen Fall ist in dem ersten Abschnitt 228 ein erster Sensor 227 angeordnet, der das Wassergewicht des Stoffes bestimmt. In einem zweiten Abschnitt 231, in dem kein Stoff sich auf dem Sieb befindet und der vorzugsweise entgegen der Maschinenrichtung läuft, ist ein zweiter Sensor 229 angeordnet. Das dargestellte Siebband weist eine Ausdehnung sowohl in Maschinenrichtung, MD-Richtung, sowie eine Breite B in CD-Richtung auf. Wie aus der Figur 3 hervorgeht, werden zu einer exakten Bestimmung in der CD-Richtung, das heißt über die Breite des Bandes hinweg, Sensoren 227, 231 an gleichen breiten Orten angeordnet.

Selbstverständlich können neben den dargestellten zwei Sensoren im ersten 228 und zweiten Abschnitt 231 mehrere Sensoren vorgesehen sein, beispielsweise in MD-Richtung oder aber auch in CD-Richtung.

In Figur 4 ist eine detaillierte Darstellung eines Wassergewichtsensors 327 im ersten Abschnitt 328 des Siebes angegeben, indem die Stoffsuspension 350 auf das Sieb aufgegeben wird. Bei den Wassergewichtssensoren 327 handelt es sich bevorzugt um Leitfähigkeitssensoren, da die Leitfähigkeit ein Maß für das in der Papierbahn vorhandene Wasser ist.

In Figur 5 ist ein erfindungsgemäßer Sensor 329 dargestellt, der den Wassergehalt beziehungsweise das Wassergewicht im Abschnitt 331 eines ohne Stoff beaufschlagten Siebes misst. Deutlich dargestellt sind auch die im Sieb vorhandenen Öffnungen 352, die für eine Durchlässigkeit des Wassers sorgen. Mit dem in Figur 5 dargestellten Sensor 3 wird das Wasser, das im Sieb zurückgehalten wurde, nachdem die Faserstoffbahn vom Sieb abgenommen wurde, bestimmt.

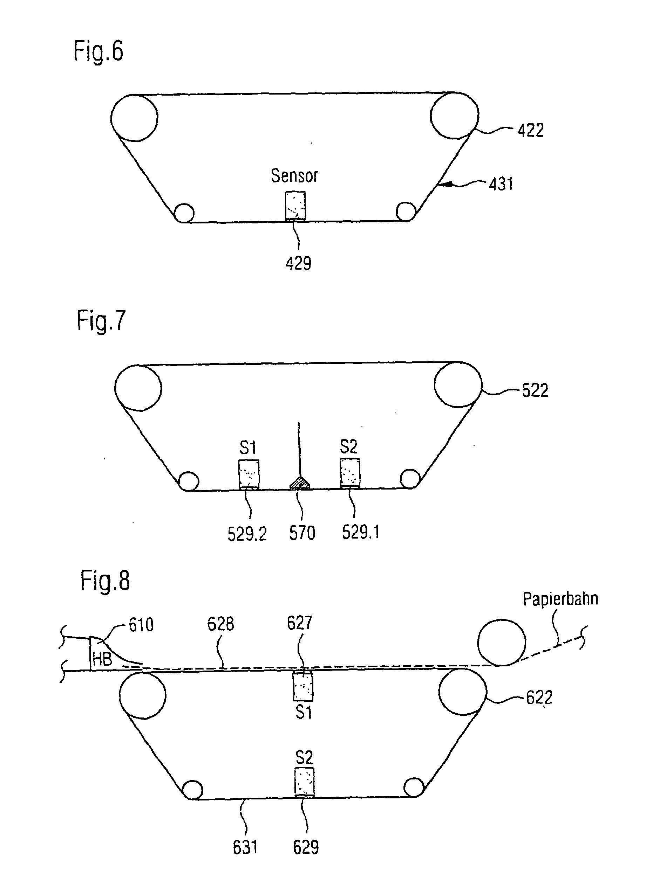

In Figur 6 ist nochmals ein umlaufendes Sieb dargestellt im Bereich der Nasspartie einer Papiermaschine. Zur Diagnose, wieviel Wasser im Sieb 422 im rücklaufenden Abstand zurückgehalten wird, wird wenigstens ein Sensor 429 in dem zweiten Abschnitt 431, in dem keine Stoffsuspension auf das Sieb aufgegeben wird, angeordnet, wie in Figur 6 gezeigt. Mit dem vom Sensor 429 ermittelten Signal ist dann eine Siebdiagnose, insbesondere über das Wasserhaltevermögen des Siebes, möglich.

Möchte man die Reinigungswirkung einer Reinigungsvorrichtung im Bereich des rücklaufenden Siebes messen, so ist es vorteilhaft, wenn man, wie in Figur 7 dargestellt, im Bereich 531 des rücklaufenden Siebes 522 vor und nach der Reinigungsvorrichtung 570 einen Wassergewichtssensor 529.1, 529.2 anordnet. Aus den Signalen des Wassergewichtes vor und nach der Reinigungsvorrichtung 570 kann dann ein Maß für die Reinigungswirkung der Siebreinigungsvorrichtung gewonnen werden.

Die in Figur 8 dargestellte Ausführungsform, bei der neben dem Sensor 629 im rücklaufenden Teil des Siebes 622 ein weiterer Sensor im Bereich des Siebes angeordnet ist, in den die Stoffsuspension aufgegeben wird, ist es möglich, eine exakte Information über den Wassergehalt in der auf das Sieb aufgebrachten Stoffsuspension zu geben. Hierzu wird vom Wassergewicht des Sensors im ersten Abschnitt 628 des Siebes das Wassergewicht, das im zweiten Abschnitt 631 des Siebes bestimmt wird, abgezogen. Die Bezugsziffern der Bauteile der Papiermaschine sind mit denen in Figur 1 erhöht um 600 identisch.

Das so ermittelte Wassergewichtssignal kann in einer Wassergewichtsregelung für eine automatische Qualitätsregelung einer fertigen Papierbahn eingesetzt werden. Bevorzugt werden bei einer Anordnung wie in Figur 8 die zweiten Sensoren im Bereich des rücklaufenden Siebes räumlich möglichst nahe an der Stelle angeordnet, an der die Papierbahn vom Sieb abgehoben und in die nachfolgende Pressenpartie überführt wird. Damit wird sichergestellt, dass der Verlust des Wassers im Sieb minimiert ist, was eine möglichst genaue Bestimmung des Wassergehaltes im Sieb zulässt und damit eine möglichst genaue Korrektur des gemessenen Wassergewichtes im ersten Abschnitt.

Mit der Erfindung werden somit erstmals eine Vorrichtung sowie ein Verfahren angegeben, mit dem das Wasser in einer Stoffsuspension auf einem umlaufenden Band exakt bestimmt werden kann, so dass eine sehr genaue Regelung des Wassergewichtsprofils der Papierqualität möglich ist. Des Weiteren erlaubt die Erfindung das Wasserhaltvermögen des Siebes zu bestimmen sowie die Effektivität der Siebreinigung. Zeitlich aufgenommene Daten können dazu dienen, Informationen über die Selbstreinigung des Siebes zur Verfügung zu stellen. Hier ist zu beachten, dass hierfür der Wassergehalt des Siebes um so weniger verschmutzt ist.

Bezugszeichenliste

| | |
|---|---|
| 10 | Stoffauflauf |
| 20 | Nasspartie |
| 22 | Sieb |
| 27 | Erster Wassergewichtssensor |
| 28 | Erster Abschnitt |
| 29 | Zweiter Wassergewichtssensor |
| 30 | Maschinenrichtung |
| 31 | Zweiter Abschnitt |
| 40 | CD-Richtung |
| 50 | Pressenpartie |
| 60 | Trockenpartie |
| 121 | Rolle |
| 122 | Sieb |
| 123 | Maschinenrichtung |
| 128 | Erster Abschnitt |

| 131 | Zweiter Abschnitt |
| 150 | Stoffsuspension |
| 222 | Sieb |
| 227 | Erster Sensor |
| 228 | Erster Abschnitt |
| 229 | Zweiter Sensor |
| 231 | Zweiter Abschnitt |
| 327 | Erster Sensor |
| 328 | Erster Abschnitt |
| 329 | Zweiter Sensor |
| 331 | Zweiter Abschnitt |
| 350 | Stoffsuspension |
| 352 | Sieböffnungen |
| 422 | Sieb |
| 429 | Zweiter Sensor |
| 431 | Zweiter Abschnitt |
| 522 | Sieb |
| 529.1 | Wassergewichtssensor |
| 529.2 | Wassergewichtssensor |
| 531 | Zweiter Abschnitt |
| 570 | Reinigungsvorrichtung |
| 622 | Sieb |
| 628 | Erster Abschnitt |
| 629 | Erster Sensor |
| 631 | Zweiter Abschnitt |

**Patentansprüche**

1. Vorrichtung, umfassend ein umlaufendes siebband (22) mit einer Durchlässigkeit für eine Flüssigkeit, wobei das umlaufende Siebband einen ersten Abschnitt (128, 228, 328, 628) aufweist, der in einer Maschinenrichtung (MD-Richtung) läuft und eingerichtet ist, eine stoffsuspension (150, 350), bestehend aus der Flüssigkeit und einem festen Stoff zu tragen
und wobei das umlaufende siebband einen zweiten Abschnitt aufweist, der ein rücklaufender Teil des umlaufenden Siebbandes ist und entgegen der Maschinenrichtung bewegt wird und der dafür vorgesehen ist, keine stoffsuspension zu tragen
**dadurch gekennzeichnet, dass**
im zweiten Abschnitt wenigstens ein zweiter Sensor (29, 229, 329, 429, 529.1, 529.2) zur Bestimmung des Flüssigkeitsgewichtes, insbesondere des wassergewichtes angeordnet ist.

2. Vorrichtung nach Anspruch 1, wobei in dem ersten Abschnitt wenigstens ein erster Sensor zur Bestimmung des gesamten Flüssigkeitsgewichtes, insbesondere des Wassergewichtes vorgesehen ist.

3. Vorrichtung nach einem der Ansprüche 1 oder 2 wobei die Stoffsuspension (150, 350) eine wässrige Faserstoffsuspension ist, und die Flüssigkeit Wasser.

4. Vorrichtung nach einem der Ansprüche 1 bis 3, wobei wenigstens einer der Sensoren (129, 229, 329, 429, 529) zur Bestimmung des Wassergewichtes ein Leitfähigkeitssensor, ein optischer Sensor, vorzugsweise ein im Infrarot-Bereich arbeitender Sensor, und/oder ein Mikrowellensensor ist,

5. Vorrichtung nach einem der Ansprüche 1 bis 4, wobei die Vorrichtung in Maschinenrichtung (MD-Richtung) eine Vielzahl von ersten und/oder zweiten Sensoren (127, 227, 327, 427, 527, 129, 229, 329, 429, 529) hat, die Maschinenrichtung (MD-Richtung) im ersten und/oder zweitenAbschnitt angeordnet sind.

6. Vorrichtung nach Anspruch 1 bis 5, wobei im rücklaufenden Abschnitt des Bandes eine Siebreinigungsvorrichtung angeordnet ist.

7. Vorrichtung nach Anspruch 6, wobei die Siebreinigungsvorrichtung zwischen zwei zweiten Sensor zur Bestimmung des Flüssigkeitsgewichtes, insbesondere des Wassergewichtes, angeordnet ist.

8. Maschine zur Herstellung einer Materialbahn, insbesondere einer Faserstoffbahn, umfassend eine Vorrichtung gemäß einem der Ansprüche 1 bis 7.

9. Maschine nach Anspruch 8, wobei die Maschine eine Nasspartie (20) umfasst und die Vorrichtung Teil der Nasspartie ist.

10. Maschine nach Anspruch 9, wobei die Nasspartie (20) eine Siebpartie umfasst und die Vorrichtung die Siebpartie darstellt.

11. verfahren zur Bestimmung des Flüssigkeitshaltevermögens eines umlaufenden Siebbandes (22) mit einer Durchlässigkeit für eine Flüssigkeit,
wobei das umlaufende Siebband einen ersten Abschnitt (128, 228, 328, 628) aufweist, der in einer Maschinenrichtung (MD-Richtung) läuft und eingerichtet ist, eine Stoffsuspension (150, 350), bestehend aus der Flüssigkeit und einem festen Stoff zu tragen
und wobei das umlaufende Siebband einen zweiten Abschnitt aufweist, der ein rücklaufender Teil des umlaufenden siebbandes ist und entgegen der Maschinenrichtung bewegt wird und der dafür vorgesehen ist, keine Stoffsuspension zu tragen
**dadurch gekennzeichnet, dass**
im zweiten Abschnitt wenigstens ein zweiter Sensor (29, 229, 329, 429, 529.1, 529.2) zur Bestimmung des Flüssigkeitsgewichtes, insbesondere des wassergewichtes angeordnet ist, der insbesondere das wasserhaltevermögen des umlaufenden Siebbandes an wenigstens einem Ort bestimmt.

12. Verfahren nach Anspruch 11
wobei

- in dem Abschnitt des Bandes, in dem keine Stoffsuspension auf das Band aufgebracht ist, das Flüssigkeitsgswicht an wenigstens zwei Orten bestimmt wird.

13. Verfahren nach Anspruch 12
wobei

- zu einem ersten Zeitpunkt in dem Abschnitt des Bandes, in dem keine Stoffsuspension auf das Band aufgebracht ist, ein erster Wert für das Flüssigkeitsgewicht, insbesondere das Wassergewicht, an wenigstens einem Ort bestimmt wird;
- zu einem zweiten Zeitpunkt, der nach dem ersten Zeitpunkt liegt, wird in dem Abschnitt des Bandes, in dem keine Stoffsuspension auf das Band aufgebracht ist, ein zweiter Wert des Flüssigkeitsgewichtes, insbesondere Wassergewichtes, bestimmt;
- es wird ein Differenzsignal gebildet aus dem ersten und dem zweiten Wert, das ein Maß für die Selbstreinigung des Siebes ist.

**14.** Verwendung einer Vorrichtung nach einem der Ansprüche 1 bis 10 in einer Nasspartie einer Papiermaschine.

**Claims**

**1.** Device comprising a circulating mesh belt (22) having a permeability to a liquid,
the circulating mesh belt having a first section (128, 228, 328, 628) which runs in a machine direction (MD direction) and is equipped to carry a stock suspension (150, 350) composed of the liquid and a solid material,
and the circulating mesh belt having a second section, which is a part of the circulating mesh belt that returns and is moved counter to the machine direction and is not provided to carry any stock suspension,
**characterized in that**
in the second section there is arranged at least one second sensor (29, 229, 329, 429, 529.1, 529.2) for determining the weight of liquid, in particular the weight of water.

**2.** Device according to Claim 1, at least one first sensor for determining the overall weight of liquid, in particular the weight of water, being provided in the first section.

**3.** Device according to either of Claims 1 and 2, the stock suspension (150, 350) being an aqueous fibrous stock suspension and the liquid being water.

**4.** Device according to one of Claims 1 to 3, at least one of the sensors (129, 229, 329, 429, 529) for determining the weight of water being a conductivity sensor, an optical sensor, preferably a sensor operating in the infrared range, and/or a microwave sensor.

**5.** Device according to one of Claims 1 to 4, the device having in the machine direction (MD direction) a multiplicity of first and/or second sensors (127, 227, 327, 427, 527, 129, 229, 329, 429, 529), which are arranged in the first and/or second section in the machine direction (MD direction).

**6.** Device according to Claims 1 to 5, a mesh cleaning device being arranged in the returning section of the belt.

**7.** Device according to Claim 6, the mesh cleaning device being arranged between two second sensors for determining the weight of liquid, in particular the weight of water.

**8.** Machine for producing a material web, in particular a fibrous web, comprising a device according to one of Claims 1 to 7.

**9.** Machine according to Claim 8, the machine comprising a wet section (20) and the device being part of the wet section.

**10.** Machine according to Claim 9, the wet section (20) comprising a wire section and the device representing the wire section.

**11.** Method for determining the liquid retention capacity of a circulating mesh belt (22) having a permeability to a liquid, the circulating mesh belt having a first section (128, 228, 328, 628) which runs in a machine direction (MD direction) and is equipped to carry a stock suspension (150, 350) composed of the liquid and a solid material,
and the circulating mesh belt having a second section, which is a part of the circulating mesh belt that returns and is moved counter to the machine direction and is not provided to carry any stock suspension,
**characterized in that**
in the second section there is arranged at least one second sensor (29, 229, 329, 429, 529.1, 529.2) for determining the weight of liquid, in particular the weight of water, and which in particular determines the water retention capacity of the circulating mesh belt at at least one location.

**12.** Method according to Claim 11,

- the weight of liquid being determined at at least two locations in the section of the belt in which no stock suspension is applied to the belt.

**13.** Method according to Claim 12,

- at a first time, a first value for the weight of liquid, in particular the weight of water, being determined at at least one location in the section of the belt in which no stock suspension is applied to the belt;
- at a second time, which follows the first time, a second value of the weight of liquid, in particular the weight of water, being determined in the section of the belt in which no stock suspension is applied to the belt;
- a differential signal, which is a measure of the self-cleaning of the mesh, being formed from the first and the second value.

**14.** Use of a device according to one of Claims 1 to 10 in a wet section of a papermaking machine.


**Revendications**

**1.** Dispositif comprenant une bande de tamis (22) en boucle sans fin qui présente une perméabilité pour un liquide, la bande de tamis en boucle sans fin présentant une première partie (128, 228, 328, 628) qui se déplace dans une direction machine (direction MD) et qui est destinée à porter une suspension de matière (150, 350) constituée du liquide et d'une matière solide, la bande de tamis en boucle sans fin présentant une deuxième partie qui est une partie de retour de la bande de tamis en boucle sans fin, qui se déplace dans le sens opposé à la direction machine et qui est prévue pour ne pas porter de suspension de matière, **caractérisé en ce que** un deuxième détecteur (29, 229, 329, 429, 529.1, 529.2) destiné à définir le poids de liquide et en particulier le poids d'eau est disposé dans la deuxième partie.

**2.** Dispositif selon la revendication 1, dans lequel au moins un premier détecteur destiné à déterminer le poids total de liquide et en particulier le poids d'eau est prévu dans la première partie.

**3.** Dispositif selon l'une des revendications 1 ou 2, dans lequel la suspension de matière (150, 350) est une suspension aqueuse de fibres et le liquide est de l'eau.

**4.** Dispositif selon l'une des revendications 1 à 3, dans lequel au moins l'un des détecteurs (129, 229, 329, 429, 529) destiné à déterminer le poids d'eau est un détecteur de conductivité, un détecteur optique, de préférence un détecteur travaillant dans la plage infrarouge, et/ou un détecteur de microondes.

**5.** Dispositif selon l'une des revendications 1 à 4, dans lequel le dispositif présente dans la direction machine (direction MD) plusieurs premiers et/ou deuxièmes détecteurs (127, 227, 327, 427, 527, 129, 229, 329, 429, 529) qui sont disposés dans la première et ou la deuxième partie dans la direction machine (direction MD).

**6.** Dispositif selon les revendications 1 à 5, dans lequel un dispositif de nettoyage du tamis est disposé dans la partie du retour de la bande.

**7.** Dispositif selon la revendication 6, dans lequel le dispositif de nettoyage du tamis est disposé entre deux deuxièmes détecteurs qui déterminent le poids de liquide et en particulier le poids d'eau.

**8.** Machine de fabrication d'une nappe de matière, en particulier d'une nappe de fibres, et comprenant un dispositif selon l'une des revendications 1 à 7.

**9.** Machine selon la revendication 8, dans laquelle la machine comporte une partie humide (20), le dispositif faisant partie de la partie humide.

**10.** Machine selon la revendication 9, dans laquelle la partie humide (20) comporte une partie de tamis et le dispositif représente la partie de tamis.

**11.** Procédé de détermination de la capacité de retenue de liquide d'une bande de tamis (22) en boucle sans fin qui présente une perméabilité pour un liquide,
la bande de tamis en boucle sans fin présentant une première partie (128, 228, 328, 628) qui se déplace dans une direction machine (direction MD) et qui est destinée à porter une suspension de matière (150, 350) constituée du liquide et d'une matière solide,
la bande de tamis en boucle sans fin présentant une deuxième partie qui est une partie de retour de la bande de tamis en boucle sans fin, qui se déplace dans le sens opposé à la direction machine et qui est prévue pour ne pas porter de suspension de matière, **caractérisé en ce que**
un deuxième détecteur (29, 229, 329, 429, 529.1, 529.2) destiné à définir le poids de liquide et en particulier le poids d'eau est disposé dans la deuxième partie.

**12.** Procédé selon la revendication 11, dans lequel le poids de liquide est déterminé en au moins deux emplacements de la partie de la bande dans laquelle aucune suspension de matière n'est appliquée sur la bande.

**13.** Procédé selon la revendication 12, dans lequel :

une première valeur du poids de liquide et en particulier du poids d'eau est déterminée à un premier instant en au moins un emplacement de la partie de la bande dans laquelle aucune suspension de matière n'est appliquée sur la bande,
une deuxième valeur du poids de liquide et en particulier du poids d'eau est déterminée en un deuxième instant postérieur au premier instant dans la partie de la bande dans laquelle aucune suspension de matière n'est appliquée sur la bande et
un signal de différence qui est une mesure de l'auto-nettoyage du tamis est formé à partir de la première et de la deuxième valeur.

**14.** Utilisation d'un dispositif selon l'une des revendications 1 à 10 dans la partie humide d'une machine à papier.

Fig.1

CD-Richtung
MD-Richtung
40
30
20
10
28
27
29
31
22
50
60

## Fig.2

Sieb mit Stoff

128    123

→ MD - Richtung

121

rücklaufendes Sieb

131    122

## Fig.3

MD - Richtung

229       222

231

Sensor 2

CD - Richtung

B

228

227    Sensor 1

mit Stoff

aufgerolltes Sieb

## Fig.4

Papierbahn     350

328      327    Sieb

Wassergewichtssensor 1

## Fig.5

331   352     329    Sieb

Wassergewichtssensor 2

**Fig.6**

**Fig.7**

**Fig.8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9955959 A1
- WO 9964963 A1
- US 6126785 A
- WO 9957531 A1
- US 20030136589 A1